# EUROPEAN PATENT SPECIFICATION

(11) **EP 3 898 721 B1**
(45) Date of publication and mention of the grant of the patent: **03.05.2023**
(21) Application number: 19809874.1
(22) Date of filing: 04.12.2019
(51) Int. Cl.: C08F 136/06, C08G 18/60, C08F 2/50, C08F 8/04, C08G 63/00, C08G 63/08, C10L 1/16

(54) **VISCOSITY INDEX IMPROVERS BASED ON BLOCK COPOLYMERS**
VISKOSITÄTSINDEXVERBESSERER AUF BASIS VON BLOCKCOPOLYMEREN
DISPOSITIFS D'AMÉLIORATION DE L'INDICE DE VISCOSITÉ BASÉS SUR DES COPOLYMÈRES SÉQUENCÉS

(30) Priority: 19.12.2018 EP 18213840
(43) Date of publication of application: 27.10.2021
(73) Proprietor: Evonik Operations GmbH, 45128 Essen (DE)
(72) Inventor: MAIER, Stefan Karl, 64372 Ober-Ramstadt (DE); KOLB, Nicolai, 45665 Recklinghausen (DE); NEUSIUS, Michael, 64297 Darmstadt (DE); ZAMPONI, Carmen, 64823 Gross-Umstadt (DE)
(74) Representative: Evonik Patent Association
(86) International application number: PCT/EP2019/083626
(87) International publication number: WO 2020/126496

(56) References cited:
- EP-A1- 3 378 877
- WO-A1-95/11927
- WO-A1-2013/177266
- US-A1- 2007 213 241
- US-A1- 2017 240 684

## Description

The present invention is directed to novel triblock copolymers, their preparation and their use as viscosity index improvers in lubricating oil compositions.

The viscosity of an oil is important for its lubricity properties. The lower the viscosity, the better the cooling. An increase in temperature reduces the viscosity. The rate of change in viscosity with temperature can be expressed in terms of viscosity index (VI). A small reduction in viscosity coupled with a large temperature change indicates a high viscosity index.

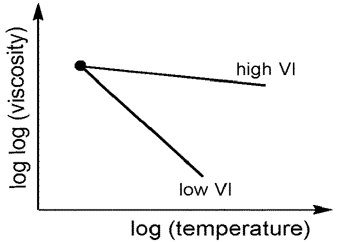

High viscosity indices (Vls) in lubricant formulations are almost exclusively provided by polyalkylmethacrylate (PAMA) products. Since the beginning of PAMA chemistry in the 1930s, the basic mechanism which involves temperature dependent coiling and uncoiling of the polymer chain has remained the same. Not much is known so far about other mechanisms that could be used to provide a VI effect.

Main disadvantage of the coiling/uncoiling mechanism is that the VI effect is strongly dependent on the molecular weight of the polymer, i.e. the VI effect gets higher with increasing molecular weight of the polymer. This is a problem as also shear stability and thickening effect of a polymer are linked to the molecular weight. Shear stability limits have always been a challenge for high VI formulations, but requirements are getting constantly more demanding. A more recent challenge are low viscosity formulations that do not leave much space for thickening polymeric additives. Therefore, a decoupling of VI effect, shear stability and thickening effect would be highly desirable.

The hydrodynamic radius of polymers used as viscosity index (VI) improvers significantly increases in mineral oil solutions when the temperature is raised. While different polymer classes are marketed as VI improvers this effect is most pronounced for polyalkylmethacrylate (PAMA) VI improvers. Common for all VI improving polymers is that the effect gets stronger with increasing molecular weight. As lubricants are subjected to high mechanical shear forces which can destroy long polymer chains the chain lengths need to be adjusted to the respective application. Target is to maximize the chain length for the strongest VI effect while keeping the viscosity loss due to shear forces in the specific application at an acceptable level.

The polymers described in this application are triblock copolymers comprising apolar polyolefinic parts and polar polyester parts. The apolar parts can be generated by OH-functionalized hydrogenated polybutadienes. In order to prevent the crystallization of these hydrogenated polybutadienes (hPBD) the structure needs to contain branches. These branches are generated by 1,2-polymerization of butadiene. For generation of triblock polymers, the hPBD needs to be OH-terminated on both sides.

The polar parts are polyesters which are prepared via ring opening polymerization of cyclic esters such as caprolactone and lactide.

Related triblock copolymers as those mentioned within this application are well known and can be useful for several applications.

For example, triblock copolymers based on hydroxy-terminated polybutadiene and cyclic esters can be used for coating and adhesive applications (see e.g. WO 2017/194209 and WO 2017/194210). Due to the triblock-structure, the compatibility of polybutadiene towards polyesters is significantly improved, which allows the joint use of polybutadienes in polyester-based formulations. This joint use is beneficial, e.g. for the wetting and adhesion on oily substrates.

Other possible applications of such triblock copolymers based on hydroxy-terminated polybutadiene and cyclic esters were described in EP 0266973 to be a matrix for rocket propellants, a raw material for the preparation of flexible polyurethane foams in WO 2016/026807 as well as oxygen absorbing materials in PET food packaging in WO 2013/177266. All those applications benefit from the improved compatibility of the polybutadiene structure to polar compounds given by the polyester blocks.

In addition, the use of block copolymers based on (mostly) hydrogenated polybutadiene and polyesters prepared from caprolactone or polyethers has been described to be used as an adhesion promoter to coat plastics with a low surface-energy such as polypropylene (see EP 0982337 and EP 1190000). Here, the block-copolymers are preferably used in additive amounts together with at least one more polymer and preferable solved in water or a mixture of water with polar solvents.

WO 95/11927 A1 relates to a polyester-modified polydiene/acrylourethane oligomer which is the reaction product of an olefinically unsaturated compound and a polyester-modified polydiene urethane prepolymer. It does not describe that the polyester residue is prepared from at least two different monomers 1 and 2, and that x is an integer of 1.8 or more.

US 2007/213241 A1 relates to a viscosity index improver (VII), an oil composition containing such a viscosity index improver and a polymeric concentrate containing such a viscosity index improver.

It does not describe that the polyester residue is prepared from at least two different monomers 1 and 2, and that x is an integer of 1.8 or more.

EP 3 378 877 A1 relates to hydrogenated polybutadiene for improving the lubricating properties in lubricating oils. It does not describe that the polyester residue is prepared from at least two different monomers 1 and 2, and that x is an integer of 1.8 or more.

It was now surprisingly found that block polymers, especially triblock polymers **A-B-A**, consisting of polyester and polyolefin moieties could not only be dissolved in naphthenic oils but did also lead to exceptionally high viscosities of the resulting solutions. It was even possible to prepare polymer solutions that have almost the same viscosity at 40°C and 100°C.

An object of the present invention is therefore directed to block copolymers of general formula (I),

**B-(A)x** (I)

wherein
- **A**: denotes a polyester residue prepared from at least two different monomers **1** and **2**, where monomer **1** is selected from the group consisting of epsilon-caprolactone and gamma-valerolactone and monomer **2** is selected from the group consisting of lactide and glycolide, and the two monomers are block-wise or randomly distributed over each polyester residue **A,**
- **B**: denotes an OH-terminated hydrogenated polybutadiene residue, and
- **x**: denotes an integer of 1.8 or more, preferably of 2 to 3.

The block copolymers according to the present invention comprise preferably at least one inner block **B** and two outer blocks **A.** Block **B** is an apolar block derived from hydrogenated polybutadiene. The hydrogenated polybutadienes are hydroxyl-terminated at both ends, i.e. have at least 1.8 OH-groups, preferably 2 to 3 OH-groups, and most preferably 2 OH-groups.

Each Block **A** is oil incompatible and derived from polyesters prepared by ring-opening polymerization of cyclic esters. The end groups are hydroxyl groups.

Each polyester residue **A** is prepared from at least two different monomers **1** and **2,** where monomer **1** is selected from the group consisting of epsilon-caprolactone and gamma-valerolactone and monomer **2** is selected from the group consisting of lactide and glycolide, and the two monomers are block-wise or randomly distributed over each polyester residue **A.** Preferably, monomers **1** and **2** are randomly distributed over each polyester residue **A.**

The residues **A** are prepared by ring-opening polymerization.

Each polyester residue **A** is preferably prepared from epsilon-caprolactone and lactide and the two monomers are randomly distributed over each polyester residue **A.**

The block copolymers according to the present invention are characterized in that the polyester residue **A** can be the same or different and has the general formula (II) 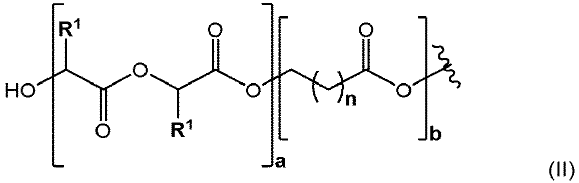 wherein
- **R¹**: is hydrogen or CH₃, preferably CH₃,
- **a**: is an integer of 3 to 50,
- **b**: is an integer of 5 to 60, and
- **n**: is an integer of 3 or 4, preferably 4, and
the **a** and **b** moieties may be randomly bonded or block-bonded and are preferably randomly bonded.

The ratio of epsilon-caprolactone to lactide is in the range of 12:1 to 1:3, preferably in the range of 6:1 to 1:2.

In order to obtain a block copolymer according to the present invention, monomer **1** and monomer **2** are mixed with the polyolefin as starter and the ring-opening polymerization is conducted at elevated temperatures in pure substance using small amounts of a catalyst.

The catalyst to be used in the present invention can be selected from the group consisting of tin(II)-ethylhexanoate, dibutyltin dilaurate, 1, 8-diazabicyclo [5.4.0] undec-7-ene, 1, 5-diazabicyclo [4.3.0] non-5- ene, 1, 4-diazabicyclo [2.2.2] octane, 1, 5,7-triazabicyclo [4.4.0] dec-5-ene, titanium tetramethanolate, titanium tetraethanloate, titanium tetrapropylate, titanium tetraisopropylate, titanium tetra-n-butylate, titanium tetra-*tert*-butylate, titanium tetraphenylate, titanium oxidacetylacetonate and titanium acetylacetonate. Preferred catalysts are selected from the group consisting of titanium tetramethanolate, titanium tetraethanolate, titanium tetrapropylate, titanium tetra-*iso*-propylate, titanium tetra-*n*-butylate, titanium tetra-*tert*-butylate, titanium tetraphenylate, titanium oxidacetylacetonate and titanium acetylacetonate.

The block copolymers according to the present invention further comprise a polyolefin residue **B** which is preferably derived from hydrogenated polybutadiene (hPBD). This is the key element for the oil solubility. In order to initiate the polyester polymerization on both sides, the hPBD needs to have hydroxyl functions on both ends of the molecule.

The hydrogenated polybutadiene is characterized by a number-average molecular weight Mₙ in the range of 1000 to 4000 g/mol, preferably in the range of 1500 to 3500 g/mol, more preferably in the range of 1,500 to 2,500, determined by gel permeation chromatography to DIN 55672-1 in tetrahydrofuran as eluent and polystyrene for calibration.

The hydrogenated polybutadiene residue **B** consists of:
(a) 60 to 100% by weight, preferably 65 to 100%, more preferably 85 to 100% of monomer units (IVa) 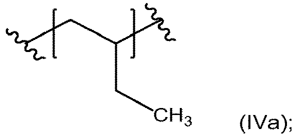 and
(b) 0 to 40% by weight, preferably 0 to 35% by weight, more preferably 0 to 15% by weight of monomer units (IVb) 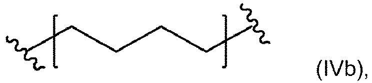
based on the total weight of the residue **B** and with the proviso that the monomer units (IVa) and (IVb) may be arranged in blocks or in random distribution.

The degree of hydrogenation of the hydrogenated polybutadiene residue **B** is at least 80%, preferably at least 90%.

The hydrogenated polybutadienes usable with preference in the context of the present invention are commercially available.

The block copolymers according to the present invention are essentially non-crystalline. That means that they do not have a melting point, determined by DSC method to DIN 11357-1.

The block copolymers according to the present invention are rather amorphous and show glass transition temperatures of below 0°C, preferably below -10°C.

The block copolymers according to general formula (I) comprise:
(a) 30 to 85% by weight, preferably 60 to 85% by weight, of polyester residues **A**; and
(b) 15 to 70% by weight, preferably 15 to 40% by weight, of hydrogenated polybutadiene residues **B**.

The block copolymers according to general formula (I) further comprise:
(a) 15 to 70% by weight of epsilon-caprolactone;
(b) 5 to 60% by weight of lactide; and
(c) 15 to 70% by weight of OH-terminated hydrogenated polybutadiene.

The content of each component (a), (b) and (c) is based on the total composition of the block copolymer.

In a particular embodiment, the proportions of components (a), (b) and (c) add up to 100% by weight.

The resulting polymers are characterized by a number-average molecular weight Mₙ in the range of 2,000 to 8,000 g/mol, preferably in the range of 3,000 to 7,000 g/mol, determined by gel permeation chromatography to DIN 55672-1 in tetrahydrofuran as eluent and polystyrene for calibration.

They are further characterized by a weight-average molecular weight M_{w} is in the range of 3,000 to 30,000 g/mol, preferably in the range of 5,000 to 26,000 g/mol, determined by gel permeation chromatography to DIN 55672-1 in tetrahydrofuran as eluent and polystyrene for calibration.

The polydispersity index PDI of the block polymers according to the present invention is in the range of 1 to 5, preferably in the range of 1.5 to 4.1.

The block copolymers are further characterized in that they consist of one block **B** and two blocks **A**; i.e. **x** denotes the integer **2.**

The block copolymers used in accordance with the invention, formed from OH-terminated polyolefins, preferably OH-terminated hydrogenated polybutadienes, and polyesters are especially obtained by OH-initiated ring-opening polymerization.

The OH-functionalized polyolefins **B** are used as an initiator in the ring opening of the lactones and lactide, which leads to the synthesis of the polyester chains to the OH-functionalized polymer. Conventional homogeneous catalysts for the ring opening polymerization are, for example, tin compounds, organic amidine bases and titanium (IV) compounds such as titan (IV) alkoholates, titan (IV) carboxylates or titan (IV) acetylacetonates. Specific examples of catalysts are as outlined further above.

The ring-opening reaction is usually conducted at temperatures of 20°C to 250°C, in particular in a period of 0.1 to 20 hours either in the melt or in the presence of a solvent.

The solvent is preferably an inert solvent without any ester-, carboxylic acid- or hydroxyl-functionality, such as toluene, benzene, hexane and mineral oil.

In accordance with the present invention, the ring-opening reaction is carried out without using any solvent.

The concentration of acid end groups of the inventively used block copolymers, determined according to DIN EN ISO 21 14, is between 0 and 50 mg KOH/g, but preferably less than 2 mg KOH/g.

A further object of the present invention is directed to a process for preparing the block copolymers of general formula (I) as described further above, the process comprising the steps of:
(i) mixing a polyolefin with a mixture of at least two different monomers **1** and **2**, where monomer **1** is selected from the group consisting of epsilon-caprolactone and gamma-valerolactone and monomer **2** is selected from the group consisting of lactide and glycolide;
(ii) adding a catalyst to the mixture prepared under step (i);
(iii) starting the a ring-opening polymerization by heating the reaction mixture prepared under step (ii) to a temperature of 100°C to 200°C and polymerizing until a polymerization degree of 99% or higher;
(iv) subsequently cooling the resulting block polymer to room temperature; and
(v) isolating the desired block copolymer.

The polyolefin used in accordance with the present invention under step (i) is preferably derived from hydrogenated polybutadiene which is defined as outlined further above.

As monomers **1** and **2** are preferably used epsilon-caprolactone and lactide in a ratio of 12:1 to 1:3, preferably in a ratio of 6:1 to 1:2.

The catalyst used under step (ii) can be selected from the group consisting of titanium tetramethanolate, titanium tetraethanloate, titanium tetrapropylate, titanium tetra-*iso-*propylate, titanium tetra-*n*-butylate, titanium tetra-*tert*-butylate, titanium tetraphenylate, titanium oxidacetylacetonate and titanium acetylacetonate.

When dissolved in apolar fluids such as mineral oils, the block polymers according to the present invention show a very pronounced thickening behavior which is not typical for polymers of such low molecular weight indicating an associative thickening mechanism. Another indicator for this hypothesis is that thickening power increases strongly with higher polymer concentration. Surprisingly this thickening effect becomes even stronger at elevated temperatures, completely opposite to what was expected. Using this effect oils with very exceptional temperature/viscosity behavior can be formulated. Formulations with extremely high VIs can be formulated in this way. Even behavior that cannot be described by the VI anymore due to lack of definition can be generated in this way. For example it is possible to generate oil formulations with a higher viscosity at 100°C than at 40°C.

An object of the present invention is therefore directed to the use of the block copolymers according to the present invention as VI improvers in lubricating oil compositions.

A further object of the present invention is directed to an additive composition, comprising:
(A) 40 to 90% by weight of at least one block copolymer of general formula (I)

   **B-(A)x** (I)

   wherein
   - **A**: denotes a polyester residue prepared from at least two different monomers **1** and **2**, where monomer **1** is selected from the group consisting of epsilon-caprolactone and gamma-valerolactone and monomer **2** is selected from the group consisting of lactide and glycolide, and the two monomers are block-wise or randomly distributed over each polyester residue **A**,
   - **B**: denotes an OH-terminated hydrogenated polybutadiene residue, and
   - **x**: denotes an integer of 1.8 or more, preferably of 2 to 3; and
(B) 10 to 60% by weight of a base oil which is selected from the group consisting of API Group I, II, III, IV or V oils and mixtures thereof.

The content of each component (A) and (B) is based on the total weight of the additive composition.

In a particular embodiment, the proportions of components (A) and (B) add up to 100% by weight.

The base oil to be used in the additive composition comprises an oil of lubricating viscosity. Such base oils are defined as specified by the American Petroleum Institute (API) (see April 2008 version of "Appendix E-API Base Oil Interchangeability Guidelines for Passenger Car Motor Oils and Diesel Engine Oils", section 1.3 Sub-heading 1.3. "Base Stock Categories").

The API currently defines five groups of lubricant base stocks (API 1509, Annex E - API Base Oil Interchangeability Guidelines for Passenger Car Motor Oils and Diesel Engine Oils, September 2011). Groups I, II and III are mineral oils which are classified by the amount of saturates and sulphur they contain and by their viscosity indices; Group IV are polyalphaolefins; and Group V are all others, including e.g. naphthenic oils. The table below illustrates these API classifications.

| Group | Saturates | Sulphur content | Viscosity Index (VI) |
|---|---|---|---|
| I | < 90% | > 0.03% | 80-120 |
| II | at least 90% | not more than 0.03% | 80-120 |
| III | at least 90% | not more than 0.03% | at least 120 |
| IV | All polyalphaolefins (PAOs) | | |
| V | All others not included in Groups I, II, III or IV (e.g. naphthenic oils) | | |

The kinematic viscosity at 40°C (KV₄₀) of appropriate apolar base oils used to prepare an additive composition or lubricating composition in accordance with the present invention is preferably in the range of 1 mm²/s to 50 mm²/s, more preferably in the range of 2 mm²/s to 40 mm²/s, according to ASTM D445.

Further base oils which can be used in accordance with the present invention are Group II-III Fischer-Tropsch derived base oils.

Fischer-Tropsch derived base oils are known in the art. By the term "Fischer-Tropsch derived" is meant that a base oil is, or is derived from, a synthesis product of a Fischer-Tropsch process. A Fischer-Tropsch derived base oil may also be referred to as a GTL (Gas-To-Liquids) base oil. Suitable Fischer-Tropsch derived base oils that may be conveniently used as the base oil in the lubricating composition of the present invention are those as for example disclosed in EP 0 776 959, EP 0 668 342, WO 97/21788, WO 00/15736, WO 00/14188, WO 00/14187, WO 00/14183, WO 00/14179, WO 00/08115, WO 99/41332, EP 1 029 029, WO 01/18156, WO 01/57166 and WO 2013/189951.

The described polymer solutions are usually clear and flowable over the whole relevant temperature range. Neither precipitation at low temperatures nor at high temperatures is observed. For a few polymer compositions precipitation at elevated temperatures can be observed dependent on the solvent. This may be an indicator that the general mechanism is based on reduced miscibility at elevated temperatures which can result in a miscibility gap for some solvent/polymer combinations.

An object of the present invention is directed to the use of an additive composition as described further above as VI improver in lubricating oil compositions.

A further object of the present invention is directed to a lubricating oil composition, comprising:
(A) 2 to 20% by weight of at least one block copolymer of general formula (I)

   **B-(A)x** (I)

   wherein
   - **A**: denotes a polyester residue prepared from at least two different monomers **1** and **2**, where monomer **1** is selected from the group consisting of epsilon-caprolactone and gamma-valerolactone and monomer **2** is selected from the group consisting of lactide and glycolide, and the two monomers are block-wise or randomly distributed over each polyester residue **A**,
   - **B**: denotes an OH-terminated hydrogenated polybutadiene residue, and
   - **x**: denotes an integer of 1.8 or more, preferably of 2 to 3;
(B) 80 to 98% by weight of a base oil which is selected from the group consisting of API Group I, II, III, IV or V oils and mixtures thereof, and
(C) 0 to 15% by weight of one or more further additives.

The content of each component (A), (B) and (C) is based on the total composition of the lubricating oil composition.

In a particular embodiment, the proportions of components (A), (B) and (C) add up to 100% by weight.

The lubricating oil composition is further characterized in that the base oil (B) comprises:
(B1) at least 50% by weight, preferably 50 to 100% by weight, of a naphthenic base oil; and
(B2) 50 or less % by weight, preferably 0 to 50% by weight, of a base oil selected from the group consisting of API Group I, II, III, IV and V oils or mixtures thereof.

The content of each component (B1) and (B2) is based on the total weight of the base oil (B). In a particular embodiment, the proportions of components (B1) and (B2) add up to 100% by weight.

The present invention also relates to the above-described lubricating oil composition, which is characterized by a high VI and a low kinematic viscosity at 40°C (KV₄₀).

The viscosity index (VI) of a lubricating oil composition according to the present invention is preferably 400 or greater, determined to ASTM D 2270, and the kinematic viscosity at 40°C is preferably less than 30 mm²/s, determined to ASTM D445.

The lubricating oil composition according to the invention may also contain, as component (C), further additives selected from the group consisting of pour point depressants, dispersants, defoamers, detergents, demulsifiers, antioxidants, antiwear additives, extreme pressure additives, friction modifiers, anticorrosion additives, dyes and mixtures thereof.

Preferred pour point depressants are, for example, selected from the group consisting of alkylated naphthalene and phenolic polymers, polyalkylmethacrylates, maleate copolymer esters and fumarate copolymer esters, which may conveniently be used as effective pour point depressants. The lubricating oil composition may contain 0.1% by weight to 0.5% by weight of a pour point depressant. Preferably, not more than 0.3% by weight of a pour point depressant is used.

Appropriate dispersants include poly(isobutylene) derivatives, for example poly(isobutylene)succinimides (PIBSIs), including borated PIBSIs; and ethylene-propylene oligomers having N/O functionalities.

Suitable defoaming agents include, for example, silicone oils, fluorosilicone oils, and fluoroalkyl ethers.

The preferred detergents include metal-containing compounds, for example phenoxides; salicylates; thiophosphonates, especially thiopyrophosphonates, thiophosphonates and phosphonates; sulfonates and carbonates. As metal, these compounds may contain especially calcium, magnesium and barium. These compounds may preferably be used in neutral or overbased form.

Preferred demulsifiers include alkyleneoxide copolymers and (meth)acrylates including polar functions.

The suitable antioxidants include, for example, phenols, for example 2,6-di-tert-butylphenol (2,6-DTB), butylated hydroxytoluene (BHT), 2,6-di-tert-butyl-4-methylphenol, 4,4'-methylenebis(2,6-di-tert-butylphenol); aromatic amines, especially alkylated diphenylamines, N-phenyl-1-naphthylamine (PNA), polymeric 2,2,4-trimethyldihydroquinone (TMQ); compounds containing sulfur and phosphorus, for example metal dithiophosphates, for example zinc dithiophosphates (ZnDTPs), "OOS triesters" = reaction products of dithiophosphoric acid with activated double bonds from olefins, cyclopentadiene, norbornadiene, α-pinene, polybutene, acrylic esters, maleic esters (ashless on combustion); organosulfur compounds, for example dialkyl sulfides, diaryl sulfides, polysulfides, modified thiols, thiophene derivatives, xanthates, thioglycols, thioaldehydes, sulfur-containing carboxylic acids; heterocyclic sulfur/nitrogen compounds, especially dialkyldimercaptothiadiazoles, 2-mercaptobenzimidazoles; zinc bis(dialkyldithiocarbamate) and methylene bis(dialkyldithiocarbamate); organophosphorus compounds, for example triaryl and trialkyl phosphites; organocopper compounds and overbased calcium- and magnesium-based phenoxides and salicylates.

The preferred antiwear and extreme pressure additives include phosphorus compounds, for example trialkyl phosphates, triaryl phosphates, e.g. tricresyl phosphate, amine-neutralized mono-and dialkyl phosphates, ethoxylated mono- and dialkyl phosphates, phosphites, phosphonates, phosphines; compounds having sulfur and phosphorus, for example metal dithiophosphates, e.g. zinc di-C₃₋₁₂-alkyldithiophosphates (ZnDTPs), ammonium dialkyldithiophosphates, antimony dialkyldithiophosphates, molybdenum dialkyldithiophosphates, lead dialkyldithiophosphates, "OOS triesters" = reaction products of dithiophosphoric acid with activated double bonds from olefins, cyclopentadiene, norbornadiene, α-pinene, polybutene, acrylic esters, maleic esters, triphenyl phosphorothionate (TPPT); compounds having sulfur and nitrogen, for example zinc bis(amyldithiocarbamate) or methylenebis(di-n-butyl dithiocarbamate); sulfur compounds with elemental sulfur and H₂S sulfurized hydrocarbons (diisobutylene, terpene); sulfurized glycerides and fatty acid esters; overbased sulfonates; chlorine compounds or solids, such as graphite or molybdenum disulfide.

Friction modifiers used may include mechanically active compounds, for example molybdenum disulfide, graphite (including fluorinated graphite), poly(trifluoroethylene), polyamide, polyimide; compounds that form adsorption layers, for example long-chain carboxylic acids, fatty acid esters, ethers, alcohols, amines, amides, imides; compounds which form layers through tribochemical reactions, for example saturated fatty acids, phosphoric acid and thiophosphoric esters, xanthogenates, sulfurized fatty acids; compounds that form polymer-like layers, for example ethoxylated dicarboxylic partial esters, dialkyl phthalates, methacrylates, unsaturated fatty acids, sulfurized olefins or organometallic compounds, for example molybdenum compounds (molybdenum dithiophosphates and molybdenum dithiocarbamates MoDTCs) and combinations thereof with ZnDTPs, copper-containing organic compounds.

Some of the compounds listed above may fulfill multiple functions. ZnDTP, for example, is primarily an antiwear additive and extreme pressure additive, but also has the character of an antioxidant and corrosion inhibitor (here: metal passivator/deactivator).

The above-detailed additives are described in detail, inter alia, in T. Mang, W. Dresel (eds.): "Lubricants and Lubrication", Wiley-VCH, Weinheim 2001; R. M. Mortier, S. T. Orszulik (eds.): "Chemistry and Technology of Lubricants".

Dispersants (including borated dispersants) are preferably used in a concentration of 0% to 2% by weight, defoamers in a concentration of 10 to 2500 ppm, detergents in a concentration of 0.05% to 1% by weight, demulsifiers in a concentration of 0% to 0.1% by weight, antioxidants in a concentration of 0.5% to 1.5% by weight, antiwear and extreme pressure additives each in a concentration of 0.1% to 1% by weight, friction modifiers in a concentration of 0.05% to 2% by weight, anticorrosion additives in a concentration of 0.05% to 0.5% by weight, and dyes in a concentration of 0.01% to 1% by weight. The concentration is based in each case on the total weight of the lubricating oil composition.

Preferably, the total concentration of the one or more additives (C) in a lubricating oil composition is up to 5% by weight, more preferably 0.1% to 4% by weight, more preferably 0.5% to 3% by weight, based on the total weight of the lubricating oil composition.

A further object of the present invention is directed to the use of the above-described lubricating oil composition as hydraulic fluid.

The invention has been further illustrated by the following non-limiting examples.

### Experimental Part

### Abbreviations

- CP: cloud point
- d-VL: delta-valerolactone
- e-CL: epsilon-caprolactone
- HITEC521^{®}: hydraulic DI package from Afton
- hPBD: hydrogenated polybutadiene
- IR8080: lrgalube^{®}8080, ashless hydraulic DI package from BASF
- KRL: Kegelrollenlager (tapered roller bearing)
- KV: kinematic viscosity measured according to ASTM D445
- KV₋₂₀: kinematic viscosity @-20°C, measured according to ASTM D445
- KV₄₀: kinematic viscosity @40°C, measured according to ASTM D445
- KV₁₀₀: kinematic viscosity @100°C, measured according to ASTM D445
- LCST: lower critical solution temperature
- Mₙ: number-average molecular weight
- M_{w}: weight-average molecular weight
- NB3020: Nexbase^{®} 3020, Group III base oil from Neste with a KV₁₀₀ of 2.2 cSt
- NB3043: Nexbase^{®} 3043, Group III base oil from Neste with a KV₁₀₀ of 4.3 cSt
- NB3060: Nexbase^{®} 3060, Group III base oil from Neste with a KV₁₀₀ of 5.9 cSt
- NS3^{®}: naphthenic base oil from Nynas with a KV₁₀₀ of 1.1 cSt
- NS8^{®}: naphthenic base oil from Nynas with a KV₁₀₀ of 2.1 cSt
- PDI: polydispersity index
- PP: pour point
- RC9300^{®}: ashless hydraulic DI package from Rheinchemie
- T_{g}: glass transition temperature
- Tₘ: melting point
- VI: viscosity index

### Test methods

The block copolymers according to the present invention and the comparative examples were characterized with respect to their molecular weight, PDI and thermal properties (differential scanning calorimetry - DSC).

The number-average molecular weights Mₙ were determined by gel permeation chromatography (GPC) to DIN 55672-1 in tetrahydrofuran as eluent and polystyrene for calibration.

Determining the thermal properties (T_{g} and Tₘ) of the block copolymers employed in the present invention was carried out by differential scanning calorimetry (DSC) according to DSC method DIN 11357-1.

The block copolymers prepared have hydroxyl groups as end groups. The concentration of OH groups is determined titrimetrically in mg KOH/g polymer according to DIN 53240-2.

The additive compositions including the block copolymers according to the present invention and comparative examples were characterized with respect to their viscosity index (VI) to ASTM D2270 and their kinematic viscosity at 40°C (KV₄₀) and 100°C (KV₁₀₀) to ASTM D445.

The lubricating oil compositions including the block copolymers according to the present invention and comparative examples were characterized with respect to kinematic viscosity at -20°C (KV₋₂₀), 40°C (KV₄₀) and 100°C (KV₁₀₀) to ASTM D445, their viscosity index (VI) to ASTM D2270, their cloud point to ASTM D5771 and their pour point to ASTM D5950.

KRL measurements to determine the shear loss were also done to CEC L-45-A-99 (20 hours, 60°C and 5kN).

In connection with the evaluation of hydraulic formulations, foam tests to ASTM D892 were run, air release was determined to DIN ISO 9120.

The Brookfield viscosity was determined to DIN 51398.

### OH-functionalized polyolefins

The following Table 1 lists the polyolefins which were used in accordance with the present invention to produce the working examples and comparative examples.

**Table 1: Dihydroxyl-functionalized polybutadienes used according to the present invention.**

| **Company** | **Tradename** | **Mₙ [g/mol]** | **Vinyl content before hydrogenation [%]** | **Hydrogenation grade [%]** |
|---|---|---|---|---|
| Nippon Soda | NISSO^{®} GI1000 | 1,500 | ≥ 85 | > 95 |
| Nippon Soda | NISSO^{®} GI2000 | 2,000 | ≥ 85 | > 95 |
| Nippon Soda | NISSO^{®} GI3000 | 3,100 | ≥ 90 | > 95 |
| Nippon Soda | NISSO^{®} G1000 | 1,400 | ≥ 85 | 0 |
| Cray Valley | Krasol^{®} HLBH | 2,100 | ≥ 65 | > 97 |
| | P-2000 | | | |
| Cray Valley | Krasol^{®} HLBH | 3,100 | ≥ 65 | > 97 |
| | P-3000 | | | |
| Evonik | POLYVEST^{®}HT | 2,900 | ≥ 20 | 0 |
| Resource | | | | |
| Efficiency | | | | |
| GmbH | | | | |

As shown in Table 1, the degree of branching is higher in the material from Nippon Soda.

### Synthesis 1: General synthesis of the block copolymers

The in Table 2 mentioned amounts of OH-functional polyolefin, epsilon-caprolactone, lactide, glycolide, delta-valerolactone and methyl-valerolactone were mixed in a 1 L multi-neck flask with reflux condenser and continuous nitrogen flow. Afterwards, 0.75 g (0.1 % by weight based on the total amount of 750 g starting materials) titanium tetra-n-butanolate (TYTAN TNBT^{®}, commercially available from Borica Company, Ltd.) were added and the resulting mixture heated to 160°C until complete monomer conversion was determined by GPC. After a polymerization degree of 99.5% or higher was achieved, the melt was transferred to a steel drum and stored under a nitrogen atmosphere at room temperature.

In Table 2 below, the monomer components will add up to 100%. The amount of initiator is given relative to the total amount of monomers.

### Synthesis 2: Synthesis of a caprolactone-lactide co-polyester using stearyl alcohol (comparative example)

60 g stearyl alcohol, 345 g epsilon-caprolactone and 345 g lactide were mixed in a 1 L multi-neck flask with reflux condenser and continuous nitrogen flow. Afterwards, 0.75 g of titanium tetra-butanolate (TYTAN TNBT^{®}, commercially available from Borica Company, Ltd.) were added and the mixture heated to 160°C for 18 hours where a polymerization degree higher than 99.5 % was achieved as checked with GPC. A co-polyester was obtained having a glass transition temperature of -28 °C and a melting transition at 10°C. The Mₙ of the copolyester was 3.4 kDa having a PDI of 2.76. The co-polyester was used for solubility experiments without any further treatment.

**Table 2: Reaction mixtures used to prepare the working examples and comparative examples.**

| **Ex. #** | **Nisso GI 1000 [g]** | **Nisso GI 2000 [g]** | **Nisso GI 3000 [g]** | **Nisso G 1000 [g]** | **stearyl alcohol [g]** | **Krasol 2000 [g]** | **Krasol 3000 [g]** | **POLYVEST ^{®} HT [g]** | **eCL [g]** | **lactide [g]** | **d-VL [g]** |
|---|---|---|---|---|---|---|---|---|---|---|---|
| **1** | 150 | -- | -- | -- | -- | -- | -- | -- | 300 | 300 | -- |
| **2*⁾** | -- | -- | -- | -- | 60 | -- | -- | -- | 345 | 345 | -- |
| **3** | 262.5 | | | -- | -- | -- | -- | -- | 243.75 | 243.75 | -- |
| **4** | 300 | | | -- | -- | -- | -- | -- | 225 | 225 | -- |
| **5** | 337.5 | | | -- | -- | -- | -- | -- | 206.25 | 206.25 | -- |
| **6** | 375 | | | -- | -- | -- | -- | -- | 187.5 | 187.5 | -- |
| **7** | 112.5 | | | -- | -- | -- | -- | -- | 318.75 | 318.75 | -- |
| **8** | 187.5 | | | -- | -- | -- | -- | -- | 281.25 | 281.25 | -- |
| **9** | 450 | -- | -- | -- | -- | -- | -- | -- | 150 | 150 | -- |
| **10** | 535 | -- | -- | -- | -- | -- | -- | -- | 112.5 | 112.5 | -- |
| **11** | -- | 225 | -- | -- | -- | -- | -- | -- | 262.5 | 262.5 | -- |
| **12** | -- | 337.5 | -- | -- | -- | -- | -- | -- | 206.25 | 206.25 | -- |
| **13** | -- | 450 | -- | -- | -- | -- | -- | -- | 150 | 150 | -- |
| **14** | -- | -- | 225 | -- | -- | -- | -- | -- | 262.5 | 262.5 | -- |
| **15** | -- | -- | 337.5 | -- | -- | -- | -- | -- | 206.25 | 206.25 | -- |
| **16** | -- | -- | 450 | -- | -- | -- | -- | -- | 150 | 150 | -- |
| **17** | 150 | -- | -- | -- | -- | -- | -- | -- | 450 | 150 | -- |
| **18** | 150 | -- | -- | -- | -- | -- | -- | -- | 150 | 450 | -- |
| **19** | 300 | -- | -- | -- | -- | -- | -- | -- | 337.5 | 112.5 | -- |
| **20** | 300 | -- | -- | -- | -- | -- | -- | -- | 112.5 | 337.5 | -- |
| **21** | 262.5 | -- | -- | -- | -- | -- | -- | -- | 300 | 187.5 | -- |
| **22** | 262.5 | -- | -- | -- | -- | -- | -- | -- | 337.5 | 150 | -- |
| **23** | 262.5 | -- | -- | -- | -- | -- | -- | -- | 375 | 112.5 | -- |
| **24** | -- | 187.5 | -- | -- | -- | -- | -- | -- | 281.25 | 281.25 | -- |
| **25** | -- | -- | 187.5 | -- | -- | -- | -- | -- | 281.25 | 281.25 | -- |
| **26*⁾** | 262.5 | -- | -- | -- | -- | -- | -- | -- | 450 | 37.5 | -- |
| **27** | -- | 150 | -- | -- | -- | -- | -- | -- | 300 | 300 | -- |
| **28** | -- | -- | 150 | -- | -- | -- | -- | -- | 300 | 300 | -- |
| **29*⁾** | 262.5 | -- | -- | -- | -- | -- | -- | -- | 412.5 | 75 | -- |
| **30** | -- | -- | -- | -- | -- | 337.5 | -- | -- | 206.25 | 206.25 | -- |
| **31** | -- | -- | -- | -- | -- | -- | 337.5 | -- | 206.25 | 206.25 | -- |
| **32** | -- | 112.5 | -- | -- | -- | -- | -- | -- | 318.75 | 318.75 | -- |
| **33** | -- | -- | 112.5 | -- | -- | -- | -- | -- | 318.75 | 318.75 | -- |
| **34** | -- | 187.5 | -- | -- | -- | -- | -- | -- | 375 | 187.5 | -- |
| **35** | -- | -- | 225 | -- | -- | -- | -- | -- | 337.5 | 187.5 | -- |
| **36** | -- | -- | 225 | -- | -- | -- | -- | -- | 187.5 | 337.5 | -- |
| **37** | 262.5 | -- | -- | -- | -- | -- | -- | -- | 187.5 | 300 | -- |
| **38** | 262.5 | -- | -- | -- | -- | -- | -- | -- | 112.5 | 375 | -- |
| **39** | -- | 150 | -- | -- | -- | -- | -- | -- | 225 | 375 | -- |
| **40** | -- | 150 | -- | -- | -- | -- | -- | -- | 375 | 225 | -- |
| **41** | -- | 165 | -- | -- | -- | -- | -- | -- | 292.5 | 292.5 | -- |
| **42** | -- | 135 | -- | -- | -- | -- | -- | -- | 307.5 | 307.5 | -- |
| **43*⁾** | -- | -- | -- | -- | -- | -- | -- | 337.5 | 206.25 | 206.25 | -- |
| **44*⁾** | -- | -- | -- | -- | -- | -- | -- | 300 | 225 | 225 | -- |
| **45*⁾** | 262.5 | -- | -- | -- | -- | -- | -- | -- | -- | 487.5 | -- |
| **46** | -- | -- | -- | -- | -- | 187.5 | -- | -- | 375 | 187.5 | -- |
| **47** | 262.5 | -- | -- | -- | -- | -- | -- | -- | 168.75 | 243.75 | 75 |
| **48** | 262.5 | -- | -- | -- | -- | -- | -- | -- | | 243.75 | 243.75 |
| **49*⁾** | -- | -- | -- | 262.5 | -- | -- | -- | -- | 243.75 | 243.75 | -- |
| **50** | 225 | -- | -- | -- | -- | -- | -- | -- | 262.5 | 262.5 | -- |

| | | | | | | | | | | | |
|---|---|---|---|---|---|---|---|---|---|---|---|
| *⁾ comparative example | | | | | | | | | | | |

Table 2 shows the reaction mixtures used to prepare the working examples as well as comparative examples. The monomer components will in each case add up to 750 g. As initiator was always used titanium tetra-*n*-butanolate (TYTAN TNBT^{®}, commercially available by Borica Company, Ltd.) in an amount of 0.75 g (0.1% by weight, based on the total amount of the monomers used). Examples 1 and 3-50 were prepared by following the protocol as described in synthesis 1. Example 2 was prepared by following the protocol as described in synthesis 2.

The net compositions of the resulting block copolymers are shown in the following Table 3a whereas the characteristic weight-average molecular weights M_{w}, number-average molecular weights Mₙ as well as polydispersity indices (PDI), glass transition temperatures and melting points are summarized in Table 3b.

**Table 3a: Net compositions of the block copolymers prepared according to the present invention.**

| **Ex. #** | **Nisso GI 1000** | **Nisso GI 2000** | **Nisso GI 3000** | **Nisso G 1000** | **stearyl alcohol** | **Krasol 2000** | **Krasol 3000** | **POLYVEST ^{®} HT** | **eCL** | **lactide** | **d-VL** |
|---|---|---|---|---|---|---|---|---|---|---|---|
| | **[wt%]** | **[wt%]** | **[wt%]** | **[wt%]** | **[wt%]** | **[wt%]** | **[wt%]** | **[wt%]** | **[wt%]** | **[wt%]** | **[wt%]** |
| **1** | 20 | -- | -- | - | -- | -- | -- | -- | 40 | 40 | -- |
| **2*⁾** | -- | -- | -- | -- | 8 | -- | -- | -- | 46 | 46 | -- |
| **3** | 35 | | | -- | -- | -- | -- | -- | 32.5 | 32.5 | -- |
| **4** | 40 | | | -- | -- | -- | -- | -- | 30 | 30 | -- |
| **5** | 45 | | | -- | -- | -- | -- | -- | 27.5 | 27.5 | -- |
| **6** | 50 | | | -- | -- | -- | -- | -- | 25 | 25 | -- |
| **7** | 15 | | | -- | -- | -- | -- | -- | 42.5 | 42.5 | -- |
| **8** | 25 | | | -- | -- | -- | -- | -- | 37.5 | 37.5 | -- |
| **9** | 60 | -- | -- | -- | -- | -- | -- | -- | 20 | 20 | -- |
| **10** | 70 | -- | -- | -- | -- | -- | -- | -- | 15 | 15 | -- |
| **11** | -- | 30 | -- | -- | -- | -- | -- | -- | 35 | 35 | -- |
| **12** | -- | 45 | -- | -- | -- | -- | -- | -- | 27.5 | 27.5 | -- |
| **13** | -- | 60 | -- | -- | -- | -- | -- | -- | 20 | 20 | -- |
| **14** | -- | -- | 30 | -- | -- | -- | -- | -- | 35 | 35 | -- |
| **15** | -- | -- | 45 | -- | -- | -- | -- | -- | 27.5 | 27.5 | -- |
| **16** | -- | -- | 60 | -- | -- | -- | -- | -- | 20 | 20 | -- |
| **17** | 20 | -- | -- | -- | -- | -- | -- | -- | 60 | 20 | -- |
| **18** | 20 | -- | -- | -- | -- | -- | -- | -- | 20 | 60 | -- |
| **19** | 40 | -- | -- | -- | -- | -- | -- | -- | 45 | 15 | -- |
| **20** | 40 | -- | -- | -- | -- | -- | -- | -- | 15 | 45 | -- |
| **21** | 35 | -- | -- | -- | -- | -- | -- | -- | 40 | 25 | -- |
| **22** | 35 | -- | -- | -- | -- | -- | -- | -- | 45 | 20 | -- |
| **23** | 35 | -- | -- | -- | -- | -- | -- | -- | 50 | 15 | -- |
| **24** | -- | 25 | -- | -- | -- | -- | -- | -- | 37.5 | 37.5 | -- |
| **25** | -- | -- | 25 | -- | -- | -- | -- | -- | 37.5 | 37.5 | -- |
| **26*⁾** | 35 | -- | -- | -- | -- | -- | -- | -- | 60 | 5 | -- |
| **27** | -- | 20 | -- | -- | -- | -- | -- | -- | 40 | 40 | -- |
| **28** | -- | -- | 20 | - | -- | -- | -- | -- | 40 | 40 | -- |
| **29*⁾** | 35 | -- | -- | -- | -- | -- | -- | -- | 55 | 10 | -- |
| **30** | -- | -- | -- | -- | -- | 45 | -- | -- | 27.5 | 27.5 | -- |
| **31** | -- | -- | -- | -- | -- | -- | 45 | -- | 27.5 | 27.5 | -- |
| **32** | -- | 15 | -- | -- | -- | -- | -- | -- | 42.5 | 42.5 | -- |
| **33** | -- | -- | 15 | -- | -- | -- | -- | -- | 42.5 | 42.5 | -- |
| **34** | -- | 25 | -- | -- | -- | -- | -- | -- | 50 | 25 | -- |
| **35** | -- | -- | 30 | -- | -- | -- | -- | -- | 45 | 25 | -- |
| **36** | -- | -- | 30 | -- | -- | -- | -- | -- | 25 | 45 | -- |
| **37** | 35 | -- | -- | -- | -- | -- | -- | -- | 25 | 40 | -- |
| **38** | 35 | -- | -- | -- | -- | -- | -- | -- | 15 | 50 | -- |
| **39** | -- | 20 | -- | -- | -- | -- | -- | -- | 30 | 50 | -- |
| **40** | -- | 20 | -- | -- | -- | -- | -- | -- | 50 | 30 | -- |
| **41** | -- | 22 | -- | -- | -- | -- | -- | -- | 39 | 39 | -- |
| **42** | -- | 18 | -- | -- | -- | -- | -- | -- | 41 | 41 | -- |
| **43*⁾** | -- | -- | -- | -- | -- | -- | -- | 45 | 27.5 | 27.5 | -- |
| **44*⁾** | -- | -- | -- | -- | -- | -- | -- | 40 | 30 | 30 | -- |
| **45*⁾** | 35 | -- | -- | -- | -- | -- | -- | -- | -- | 65 | -- |
| **46** | -- | -- | -- | -- | -- | 25 | -- | -- | 50 | 25 | -- |
| **47** | 35 | -- | -- | -- | -- | -- | -- | -- | 22.5 | 32.5 | 10 |
| **48** | 35 | -- | -- | -- | -- | -- | -- | -- | -- | 32.5 | 32.5 |
| **49*⁾** | -- | -- | -- | 35 | -- | -- | -- | -- | 32.5 | 32.5 | -- |
| **50** | 30 | -- | -- | -- | -- | -- | -- | -- | 35 | 35 | -- |

| | | | | | | | | | | | |
|---|---|---|---|---|---|---|---|---|---|---|---|
| *⁾ comparative example | | | | | | | | | | | |

**Table 3b: Characteristics of the block copolymers prepared according to the present invention.**

| **Ex. #** | **ratio caprolactone: lactide** | **Mn** | **Mw** | **PDI** | **T_{g}** | **Tₘ** |
|---|---|---|---|---|---|---|
| | | **[g/mol]** | **[g/mol]** | | **[°C]** | **[°C]** |
| **1** | 1:1 | 5,700 | 16,600 | 2.9 | -25.3 | -- |
| **2*⁾** | 1:1 | 3,400 | 9,400 | 2.8 | -28 | 10.1/ -38.4 |
| **3** | 1:1 | 4,800 | 9,000 | 1.9 | -33.2 | -- |
| **4** | 1:1 | 4,400 | 8,400 | 1.9 | -34.9 | -- |
| **5** | 1:1 | 4,200 | 7,600 | 1.8 | -36.7 | -- |
| **6** | 1:1 | 4,000 | 6,800 | 1.7 | -38.2 | -- |
| **7** | 1:1 | 6,300 | 19,100 | 3.0 | -24.4 | -- |
| **8** | 1:1 | 5,400 | 13,000 | 2.4 | -28.4 | -- |
| **9** | 1:1 | 3,700 | 5,900 | 1.6 | -41.6 | -- |
| **10** | 1:1 | 3,400 | 5,200 | 1.5 | -46.6 | -- |
| **11** | 1:1 | 5,100 | 13,800 | 2.7 | -31.6 | -- |
| **12** | 1:1 | 4,900 | 9,800 | 2 | -36.2 | -- |
| **13** | 1:1 | 4,500 | 7,400 | 1.6 | -38.6 | -- |
| **14** | 1:1 | 6,500 | 21,100 | 3.2 | -28.5 | -- |
| **15** | 1:1 | 6,000 | 13,900 | 2.3 | -34.3 | -- |
| **16** | 1:1 | 6,000 | 10,900 | 1.8 | -36.5 | -- |
| **17** | 3:1 | 6,400 | 16,500 | 2.6 | -50.2 | -- |
| **18** | 1:3 | 4,600 | 14,200 | 3.1 | -35.4/ -5.2 | -- |
| **19** | 3:1 | 4,700 | 8,700 | 1.9 | -53.7 | -- |
| **20** | 1:3 | 4,000 | 8,200 | 2.1 | -33.8/ -5.9 | -- |
| **21** | 1.6:1 | 4,500 | 9,400 | 2.1 | -40.7 | -- |
| **22** | 2.25:1 | 4,700 | 9,600 | 2.0 | -46.9 | -- |
| **23** | 3.33:1 | 4,700 | 9,900 | 2.1 | -54.0/ -44.8 | -- |
| **24** | 1:1 | 5,700 | 15,100 | 2.6 | -28 | -- |
| **25** | 1:1 | 6,400 | 19,000 | 3.0 | -24.8 | -- |
| **26*⁾** | 12:1 | 4,300 | 10,000 | 2.3 | -43.5 | 41.6 |
| **27** | 1:1 | 6,000 | 18,000 | 3 | -24.6 | -- |
| **28** | 1:1 | 5,900 | 22,400 | 3.8 | -21.7 | -- |
| **29*⁾** | 5.5:1 | 4,800 | 10,200 | 2.1 | -60.2 | 29.5 |
| **30** | 1:1 | 5,700 | 10,300 | 1.8 | -47.5 | -- |
| **31** | 1:1 | 6,200 | 13,200 | 2.1 | -25.8/ -51.2 | -- |
| **32** | 1:1 | 6,100 | 19,900 | 3.3 | -23.2 | -- |
| **33** | 1:1 | 6,200 | 25,600 | 4.1 | -21.5 | -- |
| **34** | 2:1 | 6,000 | 16,100 | 2.7 | -41.2 | -- |
| **35** | 1.8:1 | 6,700 | 18,600 | 2.8 | -37.3 | -- |
| **36** | 1:1.8 | 5,700 | 16,300 | 2.9 | -34.81 -6.3 | -- |
| **37** | 1:1.6 | 3,700 | 9,000 | 2.4 | -35.5/ -19.0 | -- |
| **38** | 1:3.3 | 4,100 | 8,900 | 2.2 | -33.2/ -1.9 | -- |
| **39** | 1:1.7 | 5,500 | 16,500 | 3.0 | -10.2 | -- |
| **40** | 1.7:1 | 5,400 | 15,100 | 2.8 | -37.6 | -- |
| **41** | 1:1 | 5,700 | 15,700 | 2.8 | -25.8 | -- |
| **42** | 1:1 | 5,100 | 15,700 | 3.1 | -23.7 | -- |
| **43*⁾** | 1:1 | 6,100 | 16,500 | 2.7 | -78/ -41.4 | -- |
| **44*⁾** | 1:1 | 5,600 | 18,400 | 3.3 | -82.8/ -45.8 | -- |
| **45*⁾** | -- | 3,700 | 9,400 | 2.5 | -38.3/ -26.1 | 138.6 |
| **46** | 2:1 | 6,400 | 17,100 | 2.7 | -43.7 | -- |
| **47** | 1:1**⁾ | 3,200 | 9,100 | 2.8 | -32.9 | -- |
| **48** | 1:1***⁾ | 2,000 | 8,700 | 4.4 | -32.9 | -- |
| **49*⁾** | 1:1 | 4,900 | 10,700 | 2.2 | -29.6 | -- |
| **50** | 1:1 | 4,200 | 10,300 | 2.5 | -31.2 | -- |

| | | | | | | |
|---|---|---|---|---|---|---|
| *⁾ comparative example **⁾ ratio (caprolactone+valerolactone) : lactide ***⁾ ratio valerolactone : lactide | | | | | | |

Examples 1, 3-25, 27, 28, 30-42, 46-48 and 50 are in accordance with the present invention. These block copolymers are all non-crystalline and show glass transition temperatures of below 0°C. Example 2 is a comparative example as the composition is not within the claimed range. Examples 26, 29 and 45 are comparative examples as their compositions are also not within the claimed range and they have a melting point; i.e. they are crystalline and not amorphous. Crystalline polymers were found not to be soluble over the whole relevant temperature range. Examples 43, 44 and 49 are comparative examples as they comprise non-hydrogenated polybutadienes as residues **B**.

### Evaluation of the properties of solutions comprising inventive block copolymers

To demonstrate the effect of block copolymers according to the present invention on the viscosity of base oils different formulation examples were prepared and the corresponding KV₄₀ and KV₁₀₀ values were measured. Formulations with naphthenic oils and API Group III oils or mixtures thereof were prepared using the base oils described in Table 4.

**Table 4: Basic viscometric properties of the oils used according to the present invention.**

| **base oil** | **NS3^{®}** | **NS8^{®}** | **NB3020** | **NB3043** | **NB3060** |
|---|---|---|---|---|---|
| **KV₄₀** | 2.8 | 7.6 | 7.5 | 20 | 32 |
| **[cSt]** | | | | | |
| **KV₁₀₀** | 1.1 | 2.1 | 2.2 | 4.3 | 5.9 |
| **[cSt]** | | | | | |
| **VI** | n.d. | 50 | 95 | 122 | 128 |
| **PP [°C]** | -87 | -63 | -45 | -18 | -15 |
| **[°C]** | | | | | |

| | | | | | |
|---|---|---|---|---|---|
| n.d. = not defined | | | | | |

Nynas NS3 and NS8 are naphthenic oils belonging to API Group V whereas NB3020, NB3043 and NB3060 are API Group III base oils.

Mineral oil can be divided into two distinct groups: paraffinic and naphthenic oils. Naphthenic oils usually have better solubility properties than paraffinic oils.

For further investigations, solutions were prepared which contain 10% by weight of a block copolymer according to the present invention and 90% of at least one base oil.

**Table 5: Viscosities of polymer solutions comprising 10% polymer in NS3 as base oil, ratio of caprolactone : lactide is 1:1.**

| **Example #** | **NISSO^{®} GI1000** | **epsilon-caprolactone** | **lactide** | **KV₄₀** | **KV₁₀₀** | **VI** |
|---|---|---|---|---|---|---|
| | **[wt%]** | **[wt%]** | **[wt%]** | **[mm²/s]** | **[mm²/s]** | |
| 7 | 15 | 42.5 | 42.5 | 17.16 | 11.25 | 696 |
| 1 | 20 | 40 | 40 | 12.41 | 9.07 | 874 |
| 8 | 25 | 37.5 | 37.5 | 8.64 | 1.47 | n.d. |
| 50 | 30 | 35 | 35 | 6.91 | 1.72 | n.d. |
| 3 | 35 | 32.5 | 32.5 | 5.73 | 2.93 | 604 |
| 4 | 40 | 30 | 30 | 5.76 | 2.50 | 400 |
| 5 | 45 | 27.5 | 27.5 | 5.81 | 2.35 | 317 |
| 6 | 50 | 25 | 25 | 5.77 | 1.89 | n.d. |
| 9 | 60 | 20 | 20 | 5.70 | 1.88 | n.d. |
| 10 | 70 | 15 | 15 | 5.28 | 1.85 | n.d. |

| | | | | | | |
|---|---|---|---|---|---|---|
| n.d. = not defined | | | | | | |

The results presented in Table 5 show that the polymers with a low content of GI1000 provide a higher thickening effect, both at 40°C and 100°C. The polymers with a content of GI1000 above 30% show only little thickening effect at 40°C, but provide a lift at 100°C.

Polymers with 25% and 30% by weight of GI1000 show very low viscosities at 100°C due to incompatibility of oil and polymers at elevated temperatures. After some time phase separation can be observed. This behavior is known as LCST behavior.

Viscometric performance of solutions containing GI2000 and GI3000 as central hPBD block are shown in Table 6 and Table 7.

**Table 6: Viscosities of polymer solutions comprising 10% polymer in NS3 as base oil, ratio of caprolactone : lactide is 1:1.**

| **Example #** | **NISSO^{®} GI2000** | **epsilon-caprolactone** | **lactide** | **KV₄₀** | **KV₁₀₀** | **VI** |
|---|---|---|---|---|---|---|
| | **[wt%]** | **[wt%]** | **[wt%]** | **[mm²/s]** | **[mm²/s]** | |
| 32 | 15 | 42.5 | 42.5 | 6.23 | 2.19 | 189 |
| 27 | 20 | 40 | 40 | 4.99 | 3.33 | 1028 |
| 24 | 25 | 37.5 | 37.5 | 4.99 | 2.26 | 444 |
| 11 | 30 | 35 | 35 | 5.30 | 2.30 | 386 |
| 12 | 45 | 27.5 | 27.5 | 6.00 | 2.21 | 222 |
| 13 | 60 | 20 | 20 | 6.16 | 2.09 | 156 |

**Table 7: Viscosities of polymer solutions comprising 10% polymer in NS3 as base oil, ratio of caprolactone : lactide is 1:1.**

| **Example #** | **NISSO^{®} GI3000** | **epsilon-caprolactone** | **lactide** | **KV₄₀** | **KV₁₀₀** | **VI** |
|---|---|---|---|---|---|---|
| | **[wt%]** | **[wt%]** | **[wt%]** | **[mm²/s]** | **[mm²/s]** | |
| 33 | 15 | 42.5 | 42.5 | 5.17 | 1.99 | n.d. |
| 28 | 20 | 40 | 40 | 8.00 | 1.92 | n.d. |
| 25 | 25 | 37.5 | 37.5 | 7.37 | 2.02 | 46 |
| 14 | 30 | 35 | 35 | 5.54 | 2.20 | 289 |
| 15 | 45 | 27.5 | 27.5 | 6.46 | 2.37 | 235 |
| 16 | 60 | 20 | 20 | 7.11 | 2.41 | 187 |

| | | | | | | |
|---|---|---|---|---|---|---|
| n.d. = not defined | | | | | | |

No LCST (lower critical solution temperature) behavior was observed for these polymers in NS3 as base oil. Around 20% content of GI2000, good VI performance in combination with very low thickening power at low temperatures was observed.

For GI3000 containing polymers, the performance in pure NS3 solution was not observed to be that prominent as by using GI1000 or GI2000 as polyolefin residue **B**. In return, good performance for these polymers could be demonstrated in less powerful solvents as demonstrated in Tables 10 and 13.

The effect of variations in the ratio of epsilon-caprolactone and lactide is shown in Table 8.

**Table 8: Variation of caprolactone/lactide ratio for polymers containing 35% GI1000. Viscosities are shown for 10% solutions in NS3 as base oil.**

| **Example #** | **NISSO^{®} GI1000** | **epsilon-caprolactone** | **lactide** | **KV₄₀** | **KV₁₀₀** | **VI** |
|---|---|---|---|---|---|---|
| | **[wt%]** | **[wt%]** | **[wt%]** | **[mm²/s]** | **[mm²/s]** | |
| 38 | 35 | 15 | 50 | 5.20 | 2.20 | 352 |
| 37 | 35 | 25 | 40 | 5.40 | 2.71 | 584 |
| 3 | 35 | 32.5 | 32.5 | 5.73 | 2.93 | 604 |
| 21 | 35 | 40 | 25 | 5.67 | 3.46 | 848 |
| 22 | 35 | 45 | 20 | 5.88 | 2.41 | 331 |
| 23 | 35 | 50 | 15 | 6.14 | n.d. | -- |
| 29 | 35 | 55 | 10 | 6.59 | 1.63 | -- |
| 26 | 35 | 60 | 5 | 7.09 | n.d. | -- |

| | | | | | | |
|---|---|---|---|---|---|---|
| n.d. = not detectable | | | | | | |

Thickening power and VI performance usually increase with higher content of caprolactone. At high caprolactone content, the polymers show lower critical solution temperatures (LCST) behavior and phase separation is observed upon heating. A polymer with a content of 35% by weight of Nisso GI1000 containing only lactide without caprolactone was completely insoluble in NS3.

In order to evaluate the effect of the solvency of the oil in more detail, different base oils were mixed. As shown in Table 9, the polymer performance can be adjusted in this way.

**Table 9: Influence of solvent mixtures on viscometric properties of polymer solutions. Composition of the polymer is 35% GI1000, 32.5% caprolactone and 32.5% lactide (Example 3).**

| **Polymer [wt%]** | **NS8^{®} [wt%]** | **2^{nd} oil [wt%]** | **2^{nd} oil** | **KV₄₀ [mm²/s]** | **KV₁₀₀ [mm²/s]** | **VI** | **Remarks** |
|---|---|---|---|---|---|---|---|
| 10 | 90 | -- | -- | 16.6 | 7.1 | 466 | -- |
| 10 | 80 | 10 | NB3020 | 17.2 | 8.3 | 535 | -- |
| 10 | 70 | 20 | NB3020 | 18.5 | 10.0 | 587 | -- |
| 10 | 60 | 30 | NB3020 | 20.6 | 4.4-6.7 | -- | not stable |
| 10 | 50 | 40 | NB3020 | 23.4 | 3.1-4.2 | -- | not stable |
| 10 | 80 | 10 | NB3043 | 22.36 | 10.3 | 491 | -- |
| 10 | 70 | 20 | NB3043 | 42.1 | 3.2-5.1 | -- | not stable |
| 10 | 80 | 10 | NB3060 | 26.7 | 3.6-4.5 | -- | not stable |
| 10 | 70 | 20 | NB3060 | 125 | 3.4-3.9 | -- | not stable |
| 10 | 80 | 10 | Plastomoll DNA | 17.5 | 7.1 | 436 | -- |

As can be seen from Table 1, hPBD building blocks were obtained from two different suppliers. While the molecular weight is similar, branching of the Nisso polymers is higher than for the Krasol polymers. Because of this, slightly improved solubility can be observed for the Nisso based polymers when comparing the Nexbase solutions listed in the following Table 10.

**Table 10: Comparison of polymers containing Nisso and Krasol hPBD building blocks.**

| **Polymer Composition** | | | | |
|---|---|---|---|---|
| **hPBD** | **Nisso^{®} GI2000** | **Krasol P-2000^{®}** | **Nisso^{®} GI3000** | **Krasol P-3000^{®}** |
| **[wt%]** | | | | |
| **hPBD** | 45 | 45 | 45 | 45 |
| **[wt%]** | | | | |
| **Caprolactone** | 27.5 | 27.5 | 27.5 | 27.5 |
| **[wt%]** | | | | |
| **Lactide** | 27.5 | 27.5 | 27.5 | 27.5 |
| **[wt%]** | | | | |

| **10% in NS3** | | | | |
|---|---|---|---|---|
| **KV₄₀** | 6.00 | 6.32 | 6.46 | 7.04 |
| **[mm²/s]** | | | | |
| **KV₁₀₀** | 2.21 | 2.29 | 2.37 | 2.53 |
| **[mm²/s]** | | | | |
| **VI** | 222 | 217 | 235 | 236 |

| **5% in NB3043** | | | | |
|---|---|---|---|---|
| **KV₄₀** | 35.1 | *⁾ | 26.1 | 26.7 |
| **[mm²/s]** | | | | |
| **KV₁₀₀** | 6.94 | *⁾ | 5.43 | 5.50 |
| **[mm²/s]** | | | | |
| **VI** | 163 | *⁾ | 150 | 149 |

| | | | | |
|---|---|---|---|---|
| *⁾...Polymer was not soluble. | | | | |

### Lubricating Compositions

Lubricating compositions will contain a range of other polar additives, which may influence the performance of an associative VI improver. Data for an HF formulation are shown in Table 11.

**Table 11: Formulation data of a polymer containing 35% GI 1000 at a ratio of caprolactone : lactide of 1:1 with DI package (Composition HF-2) and without DI package (Composition HF-1).**

| **Composition** | **HF-1** | **HF-2** |
|---|---|---|
| **Example 3** | 10.00 | 10.00 |
| **[%]** | | |
| **NS8^{®}** | 90.00 | 89.15 |
| **[%]** | | |
| **Hitec 521^{®}** | -- | 0.85 |
| **[%]** | | |
| **Blend Total** | 100.0 | 100.0 |
| **[%]** | | |
| **Test Method** | | |
| **KV₄₀** | 16.52 | 16.22 |
| **[mm²/s]** | | |
| **KV₁₀₀** | 7.09 | 6.02 |
| **[mm²/s]** | | |
| **VI** | 468 | 383 |
| **PP** | -60 | -63 |
| **[°C]** | | |
| **CP** | < -105 | < -105 |
| **[°C]** | | |
| **KV₋₂₀** | 633.5 | 650.9 |
| **[mm²/s]** | | |
| **KRL @20 hours** | | |
| **KV₄₀** | | 16.28 |
| **[mm²/s]** | | |

It can be seen that the used package has a detrimental effect on the VI performance of the polymer in this formulation.

It is further shown that the pour point (PP) stays almost the same for both formulations, with and without DI package. That means that neither turbidity nor separation of the block copolymer is observed and the formulation remains stable even at low temperatures.

The data presented in Table 11 further show very good compatibility of the block copolymers with naphthenic base oils over a broad temperature range. Very interesting is also the shear stability performance. The polymer is too small to be impacted by KRL; i.e. no permanent shear loss is observed. This is a significant advantage compared to common VI improvers in the market for which a high VI lift is always coupled to a significant loss in performance after severe mechanical shear.

Further application tests were run on formulations comprising Example 34 as presented in following Table 12. Different formulations were prepared by using only NS8 as base oil or a base oil mixture of NS8 and Plastomoll DNA (which is an API Group V oil). The formulations contained either no DI package or different DI packages.

**Table 12: Formulation data of Example 34.**

| **Composition** | **1** | **2** | **3** | **4** | **5** | **6** | **7** | **8** |
|---|---|---|---|---|---|---|---|---|
| **Example 34** | 10.00 | 10.00 | 10.00 | 10.00 | 10.00 | 10.00 | 10.00 | 10.00 |
| **[%]** | | | | | | | | |
| **NS8** | 90.00 | 89.15 | 89.40 | 89.55 | 75.00 | 74.15 | 74.40 | 74.55 |
| **[%]** | | | | | | | | |
| **Plastomoll DNA** | -- | -- | -- | -- | 15.00 | 15.00 | 15.00 | 15.00 |
| **[%]** | | | | | | | | |
| **Hitec 521^{®}** | -- | 0.85 | -- | -- | -- | 0.85 | -- | -- |
| **[%]** | | | | | | | | |
| **RC9300^{®}** | -- | -- | 0.60 | -- | -- | -- | 0.60 | -- |
| **[%]** | | | | | | | | |
| **IR8080^{®}** | -- | -- | -- | 0.45 | -- | -- | -- | 0.45 |
| **[%]** | | | | | | | | |
| **Blend Total** | 100.0 | 100.0 | 100.0 | 100.0 | 100.0 | 100.0 | 100.0 | 100.0 |
| **[%]** | | | | | | | | |
| **KV₄₀** | 13.97 | 13.97 | 14.91 | 14.63 | 18.5 | 15 | 19.6 | 19.5 |
| **[mm²/s]** | | | | | | | | |
| **KV₁₀₀** | 7.41 | 5.20 | 8.34 | 8.61 | 34 | 7.8 | 36.4 | 37.3 |
| **[mm²/s]** | | | | | | | | |
| **VI** | 608 | 375 | 634 | 668 | n.d. | 590 | n.d. | n.d. |

| | | | | | | | | |
|---|---|---|---|---|---|---|---|---|
| n.d. = not defined | | | | | | | | |

Further application tests were run on the formulations as presented in following Table 13.

**Table 13: Advanced performance testing of a formulation based on a block copolymer comprising 35 wt% Nisso GI1000 and a 1:1 ratio of caprolactone and lactide.**

| **Composition** | | **HF-3** |
|---|---|---|
| **Example 3** | | 11.5 |
| **[wt%]** | | |
| **Hitec 521^{®}** | | 0.82 |
| **[wt%]** | | |
| **NB3020** | | 18.43 |
| **[wt%]** | | |
| **NS8** | | 69.25 |
| **[wt%]** | | |
| **Blend Total** | | 100.0 |

| **Test Method** | | |
|---|---|---|
| **KV₄₀** | -- | 22.78 |
| **[mm²/s]** | | |
| **KV₁₀₀** | -- | 12.93 |
| **[mm²/s]** | | |
| **VI** | -- | 586 |
| **KV₋₂₀** | -- | 847.2 |
| **[mm²/s]** | | |
| **Brookfield Viscosity** | @-26°C | 1500 |
| **[mPas*s]** | | |
| **PP** | -- | -57 |
| **[°C]** | | |

| **Foam Test** | | |
|---|---|---|
| **Foam after Blowing Period @24°C** | Sequence I | 80 |
| **[mL]** | | |
| **Foam after 10 min @24°C** | Sequence I | 0 |
| **[mL]** | | |
| **Collapse time @24°C** | Sequence I | 76 |
| **[s]** | | |
| **Foam after Blowing Period @94°C** | Sequence II | 30 |
| **[mL]** | | |
| **Foam after 10 min @94°C** | Sequence II | 0 |
| **[mL]** | | |
| **Collapse time @94°C** | Sequence II | 17 |
| **[s]** | | |
| **Foam after Blowing Period @24°C** | Sequence III | 70 |
| **[mL]** | | |
| **Foam after 10 min @24°C** | Sequence III | 0 |
| **[mL]** | | |
| **Collapse time @24°C** | Sequence III | 33 |
| **[s]** | | |
| **Air Release @50°C** | | 1.2 |
| **[min]** | | |

Due to the high polarity of some of the polymer blocks an impact on performance tests involving interfaces was expected. For the air release and foam tests no strong effect was observed. Filtration of the fluid is no problem at all which confirms the visual observation that the polymer is completely dissolved in the oil phase.

A formulation in API Group III base oils is shown in Table 14.

**Table 14: Formulation data of a polymer containing 30 wt% GI 3000 at a caprolactone : lactide ratio of 1:1.**

| **Composition** | **HF-4** | **HF-5** | **HF-6** |
|---|---|---|---|
| **Example 14** | 5.0 | 5.0 | 5.0 |
| **[wt%]** | | | |
| **Viscoplex 1-300** | -- | -- | 0.30 |
| **[wt%]** | | | |
| **Hitec 521^{®}** | -- | 0.85 | 0.85 |
| **[wt%]** | | | |
| **NB3043** | 95.0 | 94.15 | 93.85 |
| **[wt%]** | | | |
| **Blend Total** | 100.0 | 100.0 | 100.0 |
| **[wt%]** | | | |

| **Test Method** | | | |
|---|---|---|---|
| **KV₄₀** | 40.25 | 31.85 | 33.57 |
| **[mm²/s]** | | | |
| **KV₁₀₀** | 8.61 | 6.51 | 6.87 |
| **[mm²/s]** | | | |
| **VI** | 199 | 165 | 170 |
| **KV₋₂₀** | -- | -- | 1466 |
| **[mm²/s]** | | | |
| **PP** | -- | -- | -45 |
| **[°C]** | | | |
| **KV₄₀** | | | 26.39 |
| **[mm²/s]** | | | |
| **KV₁₀₀** | | | 5.63 |
| **[mm²/s]** | | | |

## Claims

1. Block copolymers of general formula (I),
**B-(A)ₓ** (I)
wherein
**A** denotes a polyester residue prepared from at least two different monomers **1** and 2, where monomer **1** is selected from the group consisting of epsilon-caprolactone and gamma-valerolactone and monomer **2** is selected from the group consisting of lactide and glycolide, and the two monomers are block-wise or randomly distributed over each polyester residue **A**,
**B** denotes an OH-terminated hydrogenated polybutadiene residue, and
**x** denotes an integer of 1.8 or more, preferably of 2 to 3.

2. Block copolymers according to claim 1, wherein each polyester residue **A** is prepared from epsilon-caprolactone and lactide and the two monomers are randomly distributed over each polyester residue **A.**

3. Block copolymers according to claim 1, wherein each polyester residue **A** can be the same or different and has the general formula (II) 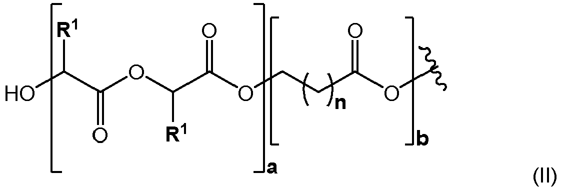 wherein
**R¹** is hydrogen or CH₃, preferably CH₃,
**a** is an integer of 3 to 50,
**b** is an integer of 5 to 60, and
**n** is an integer of 3 or 4, preferably 4, and
the **a** and **b** moieties may be randomly bonded or block-bonded and are preferably randomly bonded.

4. Block copolymers according to claim 1, 2 or 3, wherein the ratio of epsilon-caprolactone to lactide is in the range of 12:1 to 1:3, preferably in the range of 6:1 to 1:2.

5. Block copolymers according to claim 1, 2 or 3, wherein the hydrogenated polybutadiene is **characterized by** a number-average molecular weight Mₙ in the range of 1000 to 4000 g/mol, preferably in the range of 1500 to 3500 g/mol, more preferably in the range of 1,500 to 2,500, determined by gel permeation chromatography to DIN 55672-1 in tetrahydrofuran as eluent and polystyrene for calibration.

6. Block copolymers according to at least one of the precedent claims, wherein the hydrogenated polybutadiene residue **B** consists of:
(a) 60 to 100% by weight, preferably 65 to 100%, more preferably 85 to 100% of monomer units (IVa) 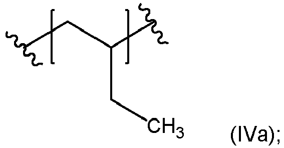 and
(b) 0 to 40% by weight, preferably 0 to 35% by weight, more preferably 0 to 15% by weight of monomer units (IVb) 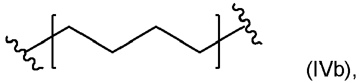 with the proviso that the monomer units (Iva) and (IVb) may be arranged in blocks or in random distribution,
based on the total weight of the residue **B.**

7. Block copolymers according to at least one of the precedent claims, wherein the degree of hydrogenation of the hydrogenated polybutadiene residue **B** is at least 80%, preferably of at least 90%.

8. Block copolymers according to at least one of the precedent claims, **characterized in that** they are essentially non-crystalline and have no melting point.

9. Block copolymers according to claim 2, comprising:
(a) 15 to 70% by weight of epsilon-caprolactone;
(b) 5 to 60% by weight of lactide; and
(c) 15 to 70% by weight of OH-terminated hydrogenated polybutadiene,
based on the total weight of the block copolymer.

10. Block copolymers according to at least one of the precedent claims, wherein the weight-average molecular weight M_{w} is in the range of 3,000 to 30,000 g/mol, preferably in the range of 5,000 to 26,000 g/mol, determined by gel permeation chromatography to DIN 55672-1 in tetrahydrofuran as eluent and polystyrene for calibration.

11. Block copolymers according to at least one of the precedent claims, **characterized in that** they consist of one block **B** and two blocks **A**; i.e. **x** denotes the integer **2.**

12. Process for preparing the block copolymers of general formula (I) according to any one of the preceding claims, the process being **characterized by** the steps of:
(i) mixing a polyolefin with a mixture of at least two different monomers **1** and **2**, where monomer **1** is selected from the group consisting of epsilon-caprolactone and gamma-valerolactone and monomer **2** is selected from the group consisting of lactide and glycolide;
(ii) adding a catalyst to the mixture prepared under step (i);
(iii) starting the a ring-opening polymerization by heating the reaction mixture prepared under step (ii) to a temperature of 100°C to 200°C and polymerizing until a polymerization degree of 99% or higher;
(iv) subsequently cooling the resulting block polymer to room temperature; and
(v) isolating the desired block copolymer.

13. Process according to claim 12, **characterized in that** the polyolefin is an at both ends OH-terminated hydrogenated polybutadiene and the polyester is a mixture of epsilon-caprolactone and lactide.

14. Use of block copolymers according to any one of claims 1 to 11 as VI improvers in lubricating oil compositions.

15. Additive composition, comprising:
(A) 40 to 90% by weight of at least one block copolymer of general formula (I)
**B-(A)ₓ** (I)
wherein
**A** denotes a polyester residue prepared from at least two different monomers **1** and **2**, where monomer **1** is selected from the group consisting of epsilon-caprolactone and gamma-valerolactone and monomer **2** is selected from the group consisting of lactide and glycolide, and the two monomers are block-wise or randomly distributed over each polyester residue **A**,
**B** denotes an OH-terminated hydrogenated polybutadiene residue, and
**X** denotes an integer of 1.8 or more, preferably of 2 to 3; and
(B) 10 to 60% by weight of a base oil which is selected from the group consisting of API Group I, II, III, IV or V oils and mixtures thereof,
based on the total weight of the additive composition.

16. Use of additive compositions according to claim 15 as VI improvers in lubricating oil compositions.

17. Lubricating oil composition, comprising:
(A) 2 to 20% by weight of at least one block copolymer of general formula (I)
**B-(A)ₓ** (I)
wherein
**A** denotes a polyester residue prepared from at least two different monomers **1** and **2**, where monomer **1** is selected from the group consisting of epsilon-caprolactone and gamma-valerolactone and monomer **2** is selected from the group consisting of lactide and glycolide, and the two monomers are block-wise or randomly distributed over each polyester residue **A**,
**B** denotes an OH-terminated hydrogenated polybutadiene residue, and
**X** denotes an integer of 1.8 or more, preferably of 2 to 3;
(B) 80 to 98% by weight of a base oil which is selected from the group consisting of API Group I, II, III, IV or V oils and mixtures thereof, and
(C) 0 to 15% by weight of one or more further additives,
based on the total weight of the lubricating oil composition.

18. Lubricating oil composition according to claim 17, **characterized in that** the one or more further additives (C) are selected from the group consisting of pour point depressants, dispersants, defoamers, detergents, demulsifiers, antioxidants, antiwear additives, extreme pressure additives, friction modifiers, anticorrosion additives, dyes and mixtures thereof.

19. Lubricating oil composition according to claim 17 or 18, being **characterized by** a VI of 400 or greater, determined to ASTM D2270, and a kinematic viscosity at 40°C of less than 30 mm²/s, determined to ASTM D445.

20. Use of a lubricating oil composition according to any one of claims 17 to 19 as hydraulic fluid.

## Patentansprüche

1. Blockcopolymere der allgemeinen Formel (I)
**B-(A)ₓ** (I)**,**
wobei
**A** für einen aus mindestens zwei verschiedenen Monomeren **1** und **2** hergestellten Polyesterrest steht, wobei Monomer **1** aus der Gruppe bestehend aus epsilon-Caprolacton und gamma-Valerolacton ausgewählt ist und Monomer **2** aus der Gruppe bestehend aus Lactid und Glycolid ausgewählt ist und die beiden Monomere blockartig oder statistisch über jeden Polyesterrest **A** verteilt sind,
**B** für einen Rest eines OH-terminierten hydrierten Polybutadiens steht und
**x** für eine ganze Zahl von 1,8 oder mehr, vorzugsweise von 2 bis 3, steht.

2. Blockcopolymere nach Anspruch 1, wobei jeder Polyesterrest **A** aus epsilon-Caprolacton und Lactid hergestellt wird und die beiden Monomere statistisch über jeden Polyesterrest **A** verteilt sind.

3. Blockcopolymere nach Anspruch 1, wobei jeder Polyesterrest **A** gleich oder verschieden sein kann und die allgemeine Formel (II) aufweist: 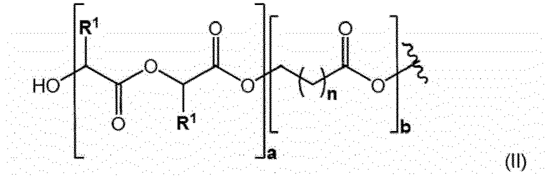 wobei
**R¹** für Wasserstoff oder CH₃, vorzugsweise CH₃, steht,
**a** für eine ganze Zahl von 3 bis 50 steht,
**b** für eine ganze Zahl von 5 bis 60 steht und
**n** für eine ganze Zahl mit einem Wert von 3 oder 4, vorzugsweise 4, steht und
die **a** und **b** Einheiten statistisch gebunden oder blockartig gebunden sein können und vorzugsweise statistisch gebunden sind.

4. Blockcopolymere nach Anspruch 1, 2 oder 3, wobei das Verhältnis von epsilon-Caprolacton zu Lactid im Bereich von 12:1 bis 1:3, vorzugsweise im Bereich von 6:1 bis 1:2, liegt.

5. Blockcopolymere nach Anspruch 1, 2 oder 3, wobei das hydrierte Polybutadien durch ein zahlenmittleres Molekulargewicht Mₙ im Bereich von 1000 bis 4000 g/mol, vorzugsweise im Bereich von 1500 bis 3500 g/mol, weiter bevorzugt im Bereich von 1500 bis 2500, bestimmt durch Gelpermeationschromatographie nach DIN 55672-1 in Tetrahydrofuran als Elutionsmittel und Polystyrol zur Kalibrierung, gekennzeichnet ist.

6. Blockcopolymere nach mindestens einem der vorhergehenden Ansprüche, wobei der Rest **B** eines hydrierten Polybutadiens aus Folgendem besteht:
(a) 60 bis 100 Gew.-%, vorzugsweise 65 bis 100 Gew.-%, weiter bevorzugt 85 bis 100 Gew.-%, Monomereinheiten (IVa) 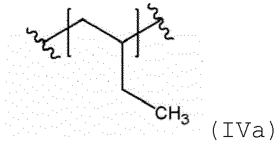 und
(b) 0 bis 40 Gew.-%, vorzugsweise 0 bis 35 Gew.-%, weiter bevorzugt 0 bis 15 Gew.-%, Monomereinheiten (IVb) 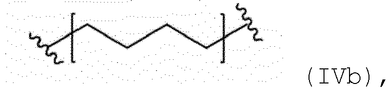
mit der Maßgabe, dass die Monomereinheiten (IVa) und (IVb) in Blöcken oder in statistischer Verteilung angeordnet sein können,
bezogen auf das Gesamtgewicht des Rests **B**.

7. Blockcopolymere nach mindestens einem der vorhergehenden Ansprüche, wobei der Hydrierungsgrad des Rests **B** eines hydrierten Polybutadiens mindestens 80 %, vorzugsweise mindestens 90 %, beträgt.

8. Blockcopolymere nach mindestens einem der vorhergehenden Ansprüche, **dadurch gekennzeichnet, dass** sie im Wesentlichen nichtkristallin sind und keinen Schmelzpunkt aufweisen.

9. Blockcopolymere nach Anspruch 2, umfassend:
(a) 15 bis 70 Gew.-% epsilon-Caprolacton;
(b) 5 bis 60 Gew.-% Lactid und
(c) 15 bis 70 Gew.-% OH-terminiertes hydriertes Polybutadien,
bezogen auf das Gesamtgewicht des Blockcopolymers.

10. Blockcopolymere nach mindestens einem der vorhergehenden Ansprüche, wobei das gewichtsmittlere Molekulargewicht M_{w} im Bereich von 3000 bis 30.000 g/mol, vorzugsweise im Bereich von 5000 bis 26.000 g/mol, bestimmt durch Gelpermeationschromatographie nach DIN 55672-1 in Tetrahydrofuran als Elutionsmittel und Polystyrol zur Kalibrierung, liegt.

11. Blockcopolymere nach mindestens einem der vorhergehenden Ansprüche, **dadurch gekennzeichnet, dass** sie aus einem Block **B** und zwei Blöcken **A** bestehen; d. h. **x** steht für die ganze Zahl **2**.

12. Verfahren zur Herstellung der Blockcopolymere der allgemeinen Formel (I) nach einem der vorhergehenden Ansprüche, wobei das Verfahren durch folgende Schritte gekennzeichnet ist:
(i) Mischen eines Polyolefins mit einer Mischung von mindestens zwei verschiedenen Monomeren **1** und **2,** wobei Monomer **1** aus der Gruppe bestehend aus epsilon-Caprolacton und gamma-Valerolacton ausgewählt wird und Monomer **2** aus der Gruppe bestehend aus Lactid und Glycolid ausgewählt wird;
(ii) Zugeben eines Katalysators zu der unter Schritt (i) hergestellten Mischung;
(iii) Starten einer Ringöffnungspolymerisation durch Erhitzen der unter Schritt (ii) hergestellten Reaktionsmischung auf eine Temperatur von 100 °C bis 200 °C und Polymerisieren bis zu einem Polymerisationsgrad von 99 % oder mehr;
(iv) anschließendes Abkühlen des erhaltenen Blockcopolymers auf Raumtemperatur und
(v) Isolieren des gewünschten Blockcopolymers.

13. Verfahren nach Anspruch 12, **dadurch gekennzeichnet, dass** es sich bei dem Polyolefin um ein an beiden Enden OH-terminiertes hydriertes Polybutadien handelt und es sich bei dem Polyester um eine Mischung von epsilon-Caprolacton und Lactid handelt.

14. Verwendung von Blockcopolymeren nach einem der Ansprüche 1 bis 11 als VI-Verbesserer in Schmierölzusammensetzungen.

15. Additivzusammensetzung, umfassend:
(A) 40 bis 90 Gew.-% mindestens eines Block-copolymers der allgemeinen Formel (I)
**B-(A)ₓ** (I),
wobei
**A** für einen aus mindestens zwei verschiedenen Monomeren **1** und **2** hergestellten Polyesterrest steht, wobei Monomer **1** aus der Gruppe bestehend aus epsilon-Caprolacton und gamma-Valerolacton ausgewählt ist und Monomer **2** aus der Gruppe bestehend aus Lactid und Glycolid ausgewählt ist und die beiden Monomere blockartig oder statistisch über jeden Polyesterrest **A** verteilt sind,
**B** für einen Rest eines OH-terminierten hydrierten Polybutadiens steht und
**x** für eine ganze Zahl von 1,8 oder mehr, vorzugsweise von 2 bis 3, steht; und
(B) 10 bis 60 Gew.-% eines Grundöls, das aus der Gruppe bestehend aus Ölen der API-Gruppe I, II, III, IV oder V und Mischungen davon ausgewählt ist,
bezogen auf das Gesamtgewicht der Additivzusammensetzung.

16. Verwendung von Additivzusammensetzung nach Anspruch 15 als VI-Verbesserer in Schmierölzusammensetzungen.

17. Schmierölzusammensetzung, umfassend:
(A) 2 bis 20 Gew.-% mindestens eines Block-copolymers der allgemeinen Formel (I)
**B-(A)ₓ** (I),
wobei
**A** für einen aus mindestens zwei verschiedenen Monomeren **1** und **2** hergestellten Polyesterrest steht, wobei Monomer **1** aus der Gruppe bestehend aus epsilon-Caprolacton und gamma-Valerolacton ausgewählt ist und Monomer **2** aus der Gruppe bestehend aus Lactid und Glycolid ausgewählt ist und die beiden Monomere blockartig oder statistisch über jeden Polyesterrest **A** verteilt sind,
**B** für einen Rest eines OH-terminierten hydrierten Polybutadiens steht und
**x** für eine ganze Zahl von 1,8 oder mehr, vorzugsweise von 2 bis 3, steht;
(B) 80 bis 98 Gew.-% eines Grundöls, das aus der Gruppe bestehend aus Ölen der API-Gruppe I, II, III, IV oder V und Mischungen davon ausgewählt ist, und
(C) 0 bis 15 Gew.-% eines oder mehrerer weiterer Additive,
bezogen auf das Gesamtgewicht der Schmierölzusammensetzung.

18. Schmierölzusammensetzung nach Anspruch 17, **dadurch gekennzeichnet, dass** das eine weitere Additiv bzw. die mehreren weiteren Additive (C) aus der Gruppe bestehend aus Pourpoint-Erniedrigern, Dispergiermitteln, Entschäumern, Detergentien, Demulgatoren, Antioxidantien, Verschleißschutzadditiven, Extremdruckadditiven, Reibwertveränderern, Korrosionsschutzadditiven, Farbstoffen und Mischungen davon ausgewählt ist bzw. sind.

19. Schmierölzusammensetzung nach Anspruch 17 oder 18, die durch einen VI von 400 oder mehr, bestimmt nach ASTM D2270, und eine kinematische Viskosität bei 40°C von weniger als 30 mm²/s, bestimmt nach ASTM D445, gekennzeichnet ist.

20. Verwendung einer Schmierölzusammensetzung nach einem der Ansprüche 17 bis 19 als Hydraulikflüssigkeit.

## Revendications

1. Copolymères à blocs de formule générale (I),
**B-(A)ₓ** (I)
A désignant un radical polyester préparé à partir d'au moins deux monomères différents 1 et 2, où le monomère 1 est choisi dans le groupe constitué par l'epsilon-caprolactone et la gamma-valérolactone et le monomère 2 est choisi dans le groupe constitué par un lactide et un glycolide, et les deux monomères sont distribués par blocs ou de manière aléatoire sur chaque radical polyester A,
B désignant un radical polybutadiène hydrogéné terminé par OH, et
x désignant un entier de 1,8 ou plus, préférablement de 2 à 3.

2. Copolymères à blocs selon la revendication 1, chaque radical polyester A étant préparé à partir de l'epsilon-caprolactone et d'un lactide et les deux monomères étant distribués de manière aléatoire sur chaque radical polyester A.

3. Copolymères à blocs selon la revendication 1, chaque radical polyester A pouvant être identique ou différent et ayant la formule générale (II) 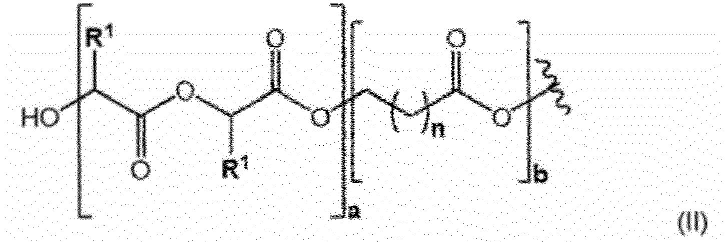
R¹ étant hydrogène ou CH₃, préférablement CH₃,
a étant un entier de 3 à 50,
b étant un entier de 5 à 60, et
n étant un entier de 3 ou 4, préférablement 4, et les groupements a et b pouvant être liés de manière aléatoire ou liés par blocs et étant préférablement liés de manière aléatoire.

4. Copolymères à blocs selon la revendication 1, 2 ou 3, le rapport d'epsilon-caprolactone sur lactide étant dans la plage de 12 : 1 à 1 : 3, préférablement dans la plage de 6 : 1 à 1 : 2.

5. Copolymères à blocs selon la revendication 1, 2 ou 3, le polybutadiène hydrogéné étant **caractérisé par** un poids moléculaire moyen en nombre Mₙ dans la plage de 1 000 à 4 000 g/mole, préférablement dans la plage de 1 500 à 3 500 g/mole, plus préférablement dans la plage de 1 500 à 2 500, déterminé par chromatographie à perméation de gel selon la norme DIN 55 672-1 dans du tétrahydrofuranne en tant qu'éluant et avec un polystyrène pour l'étalonnage.

6. Copolymères à blocs selon au moins l'une des revendications précédentes, le radical polybutadiène hydrogéné B étant constitué de :
(a) 60 à 100 % en poids, préférablement 65 à 100 %, plus préférablement 85 à 100 % de motifs monomériques (IVa) 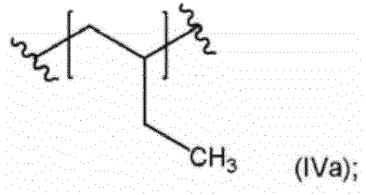 et
(b) 0 à 40 % en poids, préférablement 0 à 35 % en poids, plus préférablement 0 à 15 % en poids de motifs monomériques (IVb) 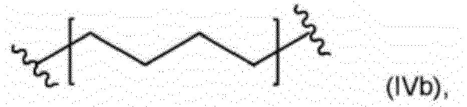 à la condition que les motifs monomériques (IVa) et (IVb) puissent être agencés en blocs ou en distribution aléatoire,
sur la base du poids total du radical B.

7. Copolymères à blocs selon au moins l'une des revendications précédentes, le degré d'hydrogénation du radical polybutadiène hydrogéné B étant d'au moins 80 %, préférablement d'au moins 90 %.

8. Copolymères à blocs selon au moins l'une des revendications précédentes, **caractérisés en ce qu'**ils sont essentiellement non cristallins et n'ont pas de point de fusion.

9. Copolymères à blocs selon la revendication 2, comprenant :
(a) 15 à 70 % en poids d'epsilon-caprolactone ;
(b) 5 à 60 % en poids de lactide ; et
(c) 15 à 70 % en poids de polybutadiène hydrogéné terminé par OH,
sur la base du poids total du copolymère à blocs.

10. Copolymères à blocs selon au moins l'une des revendications précédentes, le poids moléculaire moyen en poids M_{w} étant dans la plage de 3 000 à 30 000 g/mole, préférablement dans la plage de 5 000 à 26 000 g/mole, déterminé par chromatographie à perméation de gel selon la norme DIN 55 672-1 dans du tétrahydrofuranne en tant qu'éluant et avec un polystyrène pour l'étalonnage.

11. Copolymères à blocs selon au moins l'une des revendications précédentes, **caractérisés en ce qu'**ils sont constitués d'un bloc B et de deux blocs A ; c'est-à-dire x désigne l'entier 2.

12. Procédé pour la préparation des copolymères à blocs de formule générale (I) selon l'une quelconque des revendications précédentes, le procédé étant **caractérisé par** les étapes de :
(i) mélange d'une polyoléfine avec un mélange d'au moins deux monomères différents 1 et 2, où le monomère 1 est choisi dans le groupe constitué par l'epsilon-caprolactone et la gamma-valérolactone et le monomère 2 est choisi dans le groupe constitué par un lactide et un glycolide ;
(ii) ajout d'un catalyseur au mélange préparé dans l'étape (i) ;
(iii) commencement de la polymérisation par ouverture de cycle en chauffant le mélange réactionnel préparé dans l'étape (ii) jusqu'à une température de 100 °C à 200 °C et polymérisation jusqu'à un degré de polymérisation de 99 % ou plus ;
(iv) ensuite, refroidissement du polymère à blocs résultant jusqu'à la température ambiante ; et
(v) isolement du copolymère à blocs souhaité.

13. Procédé selon la revendication 12, **caractérisé en ce que** la polyoléfine est un polybutadiène hydrogéné terminé aux deux extrémités par OH et le polyester est un mélange d'epsilon-caprolactone et d'un lactide.

14. Utilisation de copolymères à blocs selon l'une quelconque des revendications 1 à 11 en tant qu'agents d'amélioration du VI dans des compositions d'huile lubrifiante.

15. Composition d'additif, comprenant :
(A) 40 à 90 % en poids d'au moins un copolymère à blocs de formule générale (I)
**B-(A)ₓ** (I)
A désignant un radical polyester préparé à partir d'au moins deux monomères différents 1 et 2, où le monomère 1 est choisi dans le groupe constitué par l'epsilon-caprolactone et la gamma-valérolactone et le monomère 2 est choisi dans le groupe constitué par un lactide et un glycolide, et les deux monomères sont distribués par blocs ou de manière aléatoire sur chaque radical polyester A,
B désignant un radical polybutadiène hydrogéné terminé par OH, et
X désignant un entier de 1,8 ou plus, préférablement de 2 à 3 ; et
(B) 10 à 60 % en poids d'une huile de base qui est choisie dans le groupe constitué par des huiles du groupe I, II, III, IV ou V de l'API et des mélanges correspondants,
sur la base du poids total de la composition d'additif.

16. Utilisation de compositions d'additif selon la revendication 15 en tant qu'agents d'amélioration du VI dans des compositions d'huile lubrifiante.

17. Composition d'huile lubrifiante, comprenant :
(A) 2 à 20 % en poids d'au moins un copolymère à blocs de formule générale (I)
**B-(A)ₓ** (I)
A désignant un radical polyester préparé à partir d'au moins deux monomères différents 1 et 2, où le monomère 1 est choisi dans le groupe constitué par l'epsilon-caprolactone et la gamma-valérolactone et le monomère 2 est choisi dans le groupe constitué par un lactide et un glycolide, et les deux monomères sont distribués par blocs ou de manière aléatoire sur chaque radical polyester A,
B désignant un radical polybutadiène hydrogéné terminé par OH, et
X désignant un entier de 1,8 ou plus, préférablement de 2 à 3 ;
(B) 80 à 98 % en poids d'une huile de base qui est choisie dans le groupe constitué par des huiles du groupe I, II, III, IV ou V de l'API et des mélanges correspondants, et
(C) 0 à 15 % en poids d'un ou plusieurs additifs supplémentaires,
sur la base du poids total de la composition d'huile lubrifiante.

18. Composition d'huile lubrifiante selon la revendication 17, **caractérisée en ce que** l'additif ou les additifs supplémentaires (C) sont choisis dans le groupe constitué par des agents d'abaissement du point d'écoulement, des agents de dispersion, des antimousses, des détergents, des désémulsifiants, des antioxydants, des additifs anti-usure, des additifs de pression extrême, des agents de modification de la friction, des additifs anticorrosion, des colorants et des mélanges correspondants.

19. Composition d'huile lubrifiante selon la revendication 17 ou 18, qui est **caractérisée par** un VI de 400 ou plus, déterminé selon la norme ASTM D2270, et une viscosité cinématique à 40 °C de moins de 30 mm²/s, déterminée selon la norme ASTM D445.

20. Utilisation d'une composition d'huile lubrifiante selon l'une quelconque des revendications 17 à 19 comme fluide hydraulique.
